# EUROPEAN PATENT SPECIFICATION

(11) **EP 2 625 069 B1**
(45) Date of publication and mention of the grant of the patent: **05.08.2015**
(21) Application number: 11830999.6
(22) Date of filing: 30.09.2011
(51) Int. Cl.: B60R 11/04, B60R 1/06, B60R 1/12

(54) **REARVIEW MIRROR WITH A POSITIONING DEVICE FOR OBJECT DETECTION CAMERA**
RÜCKSPIEGEL MIT EINER POSITIONIERUNGSVORRICHTUNG FÜR EINE OBJEKTERKENNUNGSKAMERA
RÉTROVISEUR AVEC UN DISPOSITIF DE POSITIONNEMENT D' UNE CAMÉRA DE DÉTECTION D'OBJETS

(30) Priority: 07.10.2010 SE 1051049
(43) Date of publication of application: 14.08.2013
(73) Proprietor: Scania CV AB, 151 87 Södertälje (SE)
(72) Inventor: OLSSON, Anders, S-126 32 Hägersten (SE); ABATAY, Koray, S-414 72 Göteborg (SE)
(74) Representative: Scania CV AB
(86) International application number: PCT/SE2011/051169
(87) International publication number: WO 2012/047154

(56) References cited:
- EP-A2- 1 170 176
- EP-A2- 1 437 261
- EP-A2- 1 854 670
- JP-A- 2007 145 041
- JP-A- 2008 221 980
- JP-A- 2010 012 865
- US-A1- 2009 284 599

## Description

### TECHNICAL FIELD

The invention relates to a positioning device for object detection cameras according to the preamble of claim 1. The invention relates also to a motor vehicle.

### BACKGROUND

Motor vehicles often operate in an environment where there are many unprotected road users and collisions between such road users and vehicles often lead to serious injuries and sometimes fatal accidents. To reduce the number of accidents between motor vehicles and, inter alia, unprotected road users, certain vehicles are equipped with object detection cameras.

EP0945305 describes a viewing system with a digital camera situated in the arm of the vehicle's rearview mirror, which arm is rotated between two positions by an electric motor. The first position views the ground immediately in front of the driver's cab, and the second position presents a view at a distance whereby obstacles at a distance from the vehicle are automatically detected and their distance calculated. Such a system entails relatively complicated fastening of the camera. Moreover, the camera is subject to vibrations and is affected by movements of the mirror.

EP 1854670 shows a positioning device for an object detection camera pertaining to a motor vehicle. This document shows also the preamble of claim 1.

### OBJECT OF THE INVENTION

An object of the present invention is to propose a positioning device for an object detection camera which enables effective detection and identification of objects and does not entail unnecessary modifications to the vehicle.

### SUMMARY OF THE INVENTION

This and other objects indicated by the description set out below are achieved by means of a positioning device and a motor vehicle of the kind indicated in the introduction which further have the features indicated in the characterising part of the attached independent claims 1 and 6. Preferred embodiments of the positioning device are defined in the attached dependent claims 2-5.

According to the Invention, the object is achieved with a positioning device for an obJect detection camera on a motor vehicle, such that the positioning device forms part of a rearview mirror configuration and said camera is firmly attached to a lower spigot firmly connected to the vehicle and forming part of an articulation which comprises a protruding end region and which serves as the rotational centre of said rearview mirror configuration. Vibrations of the camera are thus reduced and its position will be constant relative to the vehicle, making it easy to calibrate the camera for identification of objects such as unprotected road users. The camera being firmly connected to said articulation as above means that there is no need for any extra modifications to the vehicle's bodywork for fastening of the camera and consequently no further risk of corrosion. Locating the camera at said articulation also makes it possible for it to be readily accessible for maintenance or replacement.

According to an embodiment of the positioning device, said articulation comprises at least one firmly attached pivot stem to which said object detection camera is itself firmly attached.

According to an embodiment of the positioning device, the monitoring lobe of said object detection camera is calibrated relative to the position of the pivot stem on the vehicle. This enables effective detection and identification of objects such as unprotected road users.

According to an embodiment of the positioning device, said object detection camera comprises a wide-angle function. This makes it possible for a large area in the vicinity of the vehicle to be covered for detection and identification of objects without the camera's position relative to the vehicle having to be altered.

According to an embodiment of the positioning device, the rearview mirror configuration is arranged to be pivotable by means of at least one connecting element relative to said pivot stem. This enables adjustment of the vehicle's rearview mirror without the camera's position being affected.

### DESCRIPTION OF DRAWINGS

The present invention will be better understood by reading the following detailed description together with the attached drawings, in which the same reference notations refer to similar items throughout the various views, in which:
Fig. 1 a is a schematic perspective view of a forward portion of a motor vehicle with a positioning device for an object detection camera according to an embodiment of the present invention;
Fig. 1b is a schematic side view of the vehicle in Fig. 1 a;
Fig. 2a Is a schematic perspective view obliquely from above of a rearview mirror configuration with a positioning device for an object detection camera according to an embodiment of the present invention;
Fig. 2b is a schematic perspective view obliquely from below of the rearview mirror configuration in Fig. 2a;
Fig. 3a is a schematic perspective view of a positioning device for an object detection camera according to an embodiment of the present invention;
Fig. 3b is a schematic exploded view of the positioning device in Fig. 3a; and
Fig. 4 is a schematic plan view as seen from above of a motor vehicle with a monitoring lobe of an object detection camera of the positioning device according to the present invention.

### DESCRIPTION OF EMBODIMENTS

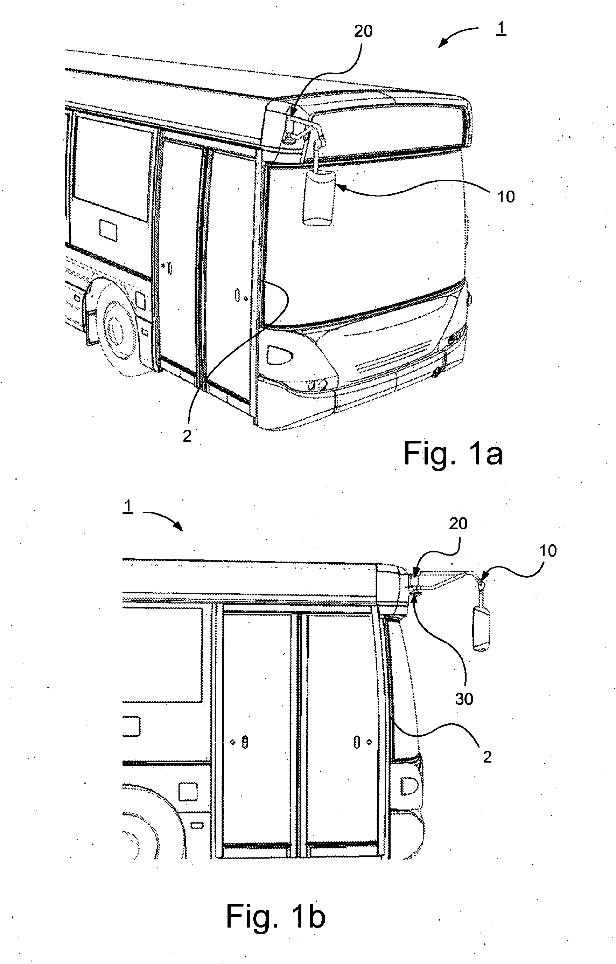

Fig. 1a Is a schematic perspective view of a forward portion of a motor vehicle 1 with a positioning device 20 forming part of a rearview mirror configuration 10 and intended for an object detection camera according to an embodiment of the present invention, and Fig. 1b is a schematic side view of the vehicle 1 in Fig. 1a. The vehicle 1 takes the form here of a bus. Alternatively the vehicle 1 takes the form of a truck. According to a further alternative the vehicle 1 takes the form of a car.

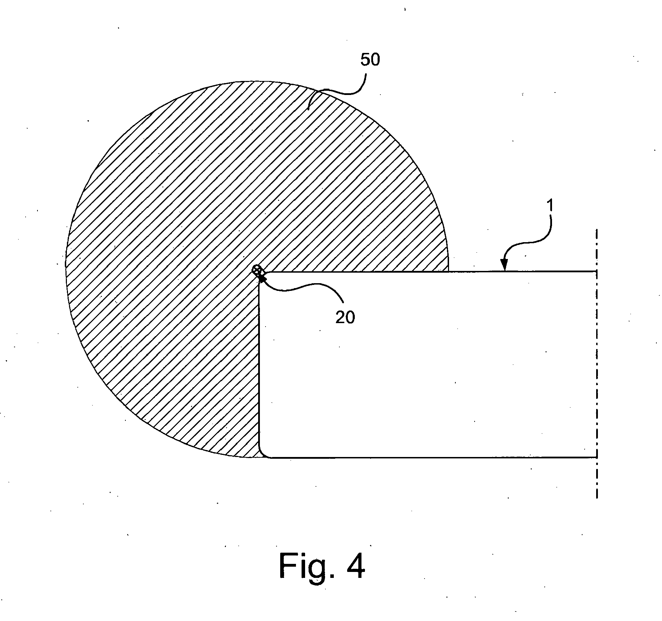

The vehicle 1, i.e. the bus according to Figs. 1a-b, is a bus 1 intended for right-hand traffic, so the driver's location is situated front left in the bus 1. The rearview mirror configuration 10 comprising the positioning device 20 for the object detection camera 30 is fastened at the forward upper right corner of the vehicle such that It is adapted to monitoring an area around the forward right corner of the bus 1 in front of and to the side of the bus. See Fig. 4. This is so inter alia because the driver's location and an A-pillar 2 on the right side limit his/her view of the region around the forward right corner of the bus 1 in front of and to the side of the bus.

The camera 30 is adapted to detecting objects, particularly unprotected road users such as pedestrians and cyclists, and information from it is arranged to be processed in order to identify said objects and on that basis use warning systems to draw the driver's attention to the object and/or cause the bus 1 to automatically take action such as braking and/or evasive manoeuvres in , order to avoid a collision between the vehicle and the object/unprotected road user.

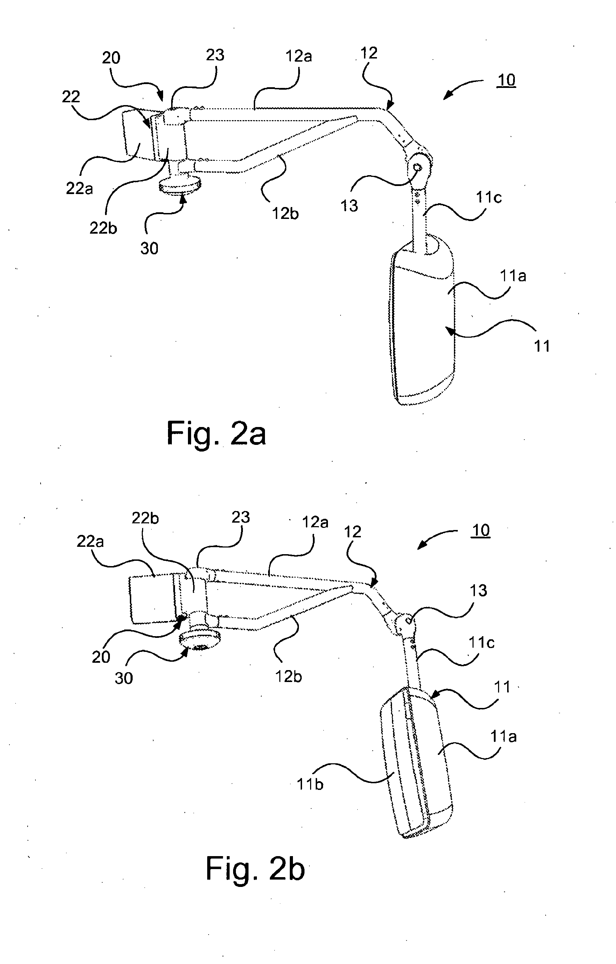

Fig. 2a is a schematic perspective view as seen from above of the rearview mirror configuration 10 with a positioning device 20 for an object detection camera 30 according to an embodiment of the present invention and Fig. 2b is a schematic perspective view as seen from below of the rearview mirror configuration 10 in Fig. 2a.

The rearview mirror configuration 10 comprises a rearview mirror unit 11 comprising a mirror head 11a with a mirror glass 11b, and a neck portion 11c protruding from the mirror head 11a.

The rearview mirror configuration 10 further comprises an arm configuration 12 with a first end adapted to being rotatable at the end of said neck portion 11c at an articulation 13 substantially transversely to the vehicle's longer direction so that the mirror head 11a can be adjusted pivotably to and fro in the vehicle's longitudinal extent about said articulation 13 so that the angle of the mirror surface of the mirror glass 11 b relative to the plane running perpendicular to the vehicle's longitudinal and transverse directions as seen from the side may be varied to provide the driver with optimum rearward views.

The rearview mirror configuration 10 further comprises a fastening means 22 intended to be attached firmly in the vehicle's upper forward portion, according to a variant on a bus for right-hand traffic, at the upper forward right corner of the bus.

Said arm configuration 12, from a portion at a distance from the first end, is divided into an upper arm section 12a and a lower arm section 12b which each have a respective end portion at a distance from one another. The respective end portions of the first and second arm sections 12a, 12b are connected rotatably to an articulation 23 of the fastening means intended to run substantially perpendicular to the vehicle's transverse and longitudinal directions so that the mirror head 11a can be adjusted rotatably sideways about said articulation 23 so that the angle of the mirror surface of the mirror glass 11b relative to the plane which runs perpendicular to the vehicle's longitudinal and transverse directions as seen from above can be varied to provide the driver with optimum rearward views.

The end portion of the upper arm section 12a is connected to an upper portion 23a of said articulation 23 via an upper connecting element 24a. Said upper portion 23a takes the form of a fastening element 23a. The end portion of the lower arm section 12b is connected to a lower portion 23b of said articulation via a lower connecting element 24b. Said lower portion takes the form of a lower spigot 23b.

Said camera 30 is attached firmly to the lower spigot 23b which is firmly connected to the vehicle and which forms part of said articulation 23 serving as the rotational centre X of said rearview mirror configuration 10.

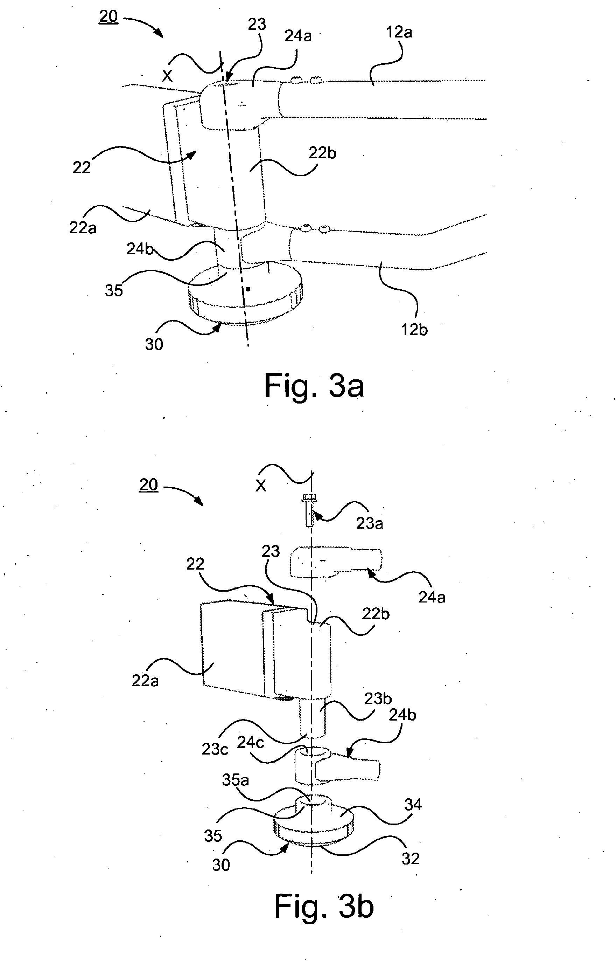

Fig. 3a is a schematic perspective view of a positioning device 20 for an object detection camera 30 according to an embodiment of the present invention and Fig. 3b is a schematic exploded view of the positioning device 20 in Fig. 3a.

The positioning device 20 comprises said fastening means 22. The fastening means 22 has a first fastening portion 22a adapted to being fastened to the vehicle's frame or equivalent. The fastening means 22 has a second portion 22b with a spigot 23b pointing downwards and protruding below the lower end of the first fastening portion 22a.

The positioning device 20 comprises said upper connecting element 24a which is adapted to being fastened pivotably by means of said fastening element 23a at the upper end of said articulation 23. Said upper connecting element 24a has running through it an aperture through which said fastening element 22a is adapted to being inserted in order to be fastened to said upper end of the articulation 23.

The positioning device 20 comprises said lower connecting element 24b adapted to being fastened rotatably to said spigot 23b of the articulation. Said lower connecting element 24b has running through it an aperture 24c through which said spigot 23b is adapted to being inserted so that an end region 23c of said spigot protrudes below said lower connecting element 24b.

Said fastening element 23a and said spigot 23b form a pivot stem about which the rearview mirror configuration 10 is adapted to being pivotable via said connecting elements 24a, 24b.

Said object detection camera 30 has according to this embodiment a substantially circular shape with a lens side where a wide-angle lens 32 is situated, and an opposite side 34. The camera 30 has a portion 35 which protrudes substantially concentrically from said opposite side 34 and which is provided with an aperture 35a adapted to accommodating said protruding end region 23c of the spigot 23b in order to attach the camera 30 firmly thereto. Said camera 30 comprises a wide-angle function adapted to being performed by means of said wide-angle lens 32.

According to a variant, the camera 30 is adapted to being screwed firmly to the end region 23c of the spigot 23b. The aperture 35a consequently has, according to this variant, an internal thread and the end region 23c of spigot 23b has an external thread which corresponds to the internal thread in the aperture 35a of the camera 30.

Fig. 4 is a schematic plan view as seen from above of a vehicle 1 with a monitoring lobe 50 of the object detection camera 30 of the positioning device 20 according to the present invention.

The monitoring lobe of said camera 30 is calibrated relative to the position of the vehicle's said pivot stem, i.e. relative to the position of the vehicle's articulation 23.

The above description refers to a positioning device for the camera 30 on the vehicle 1, which positioning device 20 Is comprised in a rearview mirror configuration 10 whereby said camera 30 is attached firmly to a portion firmly connected to the vehicle of an articulation serving as the rotational centre of said raarview mirror configuration 10.

The vehicle according to the embodiments described above takes the form of a bus. It may according to alternative embodiments take the form of any suitable vehicle. Moreover, the rearview mirror configuration may take the form of any suitable such configuration whereby the camera 30 Is attached firmly to a portion connected firmly to the vehicle of an articulation serving as the rotational centre of said rearview mirror configuration 10. Any suitable object detection camera may also be used, be of any suitable configuration and be fastened to the portion of the articulation in any suitable way. The vehicle described above also takes the form of a bus intended for right-hand traffic. The vehicle may take the form of a bus or some other vehicle intended for left-hand traffic, in which case the positioning device will be situated at the opposite comer from the above example, I.e. It will be fastened at the forward upper left corner of the vehicle/bus.

The above description of the preferred embodiments of the present invention is for illustrative and descriptive purposes. It is not intended to be exhaustive nor to restrict the invention to the variants described. Many modifications and variations will obviously suggest themselves to specialists. The embodiments were chosen and described in order best to explain the principles of the invention and practical applications thereof, and thereby make it possible for one skilled in the art to understand the invention for different embodiments and with the various modifications appropriate to the intended use.

## Claims

1. Rearview mirror with a positioning device (20) for an object detection camera (30) pertaining to a motor vehicle (1), which positioning device forms part of a rearview mirror configuration (10), **characterised in that** said camera (30) is attached firmly to a lower spigot (23b) firmly connected to the vehicle of an articulation (23) which comprises a protruding end region (23c) and which serves as the rotational centre (X) of said rearview mirror configuration (10).

2. A positioning device according to claim 1, such that said articulation (23) comprises at least one firmly attached pivot stem (23a, 23b) to which said camera (30) is firmly attached.

3. A positioning device according to claim 1 or 2, such that the monitoring lobe (50) of said camera (30) is calibrated relative to the position of said pivot stem (23a, 23b) on the vehicle.

4. A positioning device according to any one of claims 1-3, such that said camera (30) comprises a wide-angle function.

5. A positioning device according to any one of claims 1-4, such that the rearview mirror configuration (10) is attached pivotably to said pivot stem by at least one connecting element (24a, 24b).

6. A motor vehicle comprising a positioning device according to any one of claims 1-5.

## Patentansprüche

1. Rückspiegel mit einer Positioniervorrichtung (20) für eine Objekterkennungskamera (30) betreffend ein Kraftfahrzeug (1), wobei die Positioniervorrichtung einen Teil einer Rückspiegelanordnung (10) bildet, **dadurch gekennzeichnet, dass** die Kamera (30) fest an einem unteren Zapfen (23b) angebracht ist, der mit dem Fahrzeug fest verbunden ist und einen Teil eines Gelenks (23) bildet, welches einen hervorstehenden Endbereich (23c) umfasst und welches als Rotationszentrum (X) der Rückspiegelanordnung (10) dient.

2. Positioniervorrichtung nach Anspruch 1, wobei das Gelenk (23) zumindest einen fest angebrachten Gelenkbolzen (23a, 23b) umfasst, an dem die Kamera (30) fest angebracht ist.

3. Positioniervorrichtung nach Anspruch 1 oder 2, wobei der Überwachungsbereich (50) mit Keulencharakteristik der Kamera (30) relativ zu der Position des Gelenkbolzens (23a, 23b) am Fahrzeug kalibriert ist.

4. Positioniervorrichtung nach einem der Ansprüche 1 bis 3, wobei die Kamera (30) eine Weitwinkelfunktion umfasst.

5. Positioniervorrichtung nach einem der Ansprüche 1 bis 4, wobei die Rückspiegelanordnung (10) über mindestens ein Verbindungselement (24a, 24b) schwenkbar an dem Gelenkbolzen angebracht ist.

6. Kraftfahrzeug, das eine Positioniervorrichtung nach einem der Ansprüche 1 bis 5 umfasst.

## Revendications

1. Rétroviseur ayant un dispositif de positionnement (20) pour une caméra de détection d'objet (30) appartenant à un véhicule à moteur (1), lequel dispositif de positionnement fait partie d'une configuration de rétroviseur (10), **caractérisé en ce que** ladite caméra (30) est attachée fermement à un ergot inférieur (23b), fermement relié au véhicule, d'une articulation (23) qui comprend une région d'extrémité saillante (23c) et qui sert de centre de rotation (X) de ladite configuration de rétroviseur (10).

2. Dispositif de positionnement selon la revendication 1, tel que ladite articulation (23) comprend au moins une tige formant pivot, fermement attachée (23a, 23b), sur laquelle est fermement attachée ladite caméra (30).

3. Dispositif de positionnement selon la revendication 1 ou 2, tel que le lobe surveillance (50) de ladite caméra (30) est calibré par rapport à la position de ladite tige formant pivot (23a, 23b) sur le véhicule.

4. Dispositif de positionnement selon l'une quelconque des revendications 1 à 3, tel que ladite caméra (30) comprend une fonction grand angle.

5. Dispositif de positionnement selon l'une quelconque des revendications 1 à 4, tel que la configuration de rétroviseur (10) est attachée de manière pivotante à ladite tige formant pivot par au moins un élément de connexion (24a, 24b).

6. Véhicule à moteur comprenant un dispositif de positionnement selon l'une quelconque des revendications 1 à 5.
